# EUROPEAN PATENT APPLICATION

(11) **EP 2 072 302 A1**
(43) Date of publication of application: **24.06.2009**
(21) Application number: 07025072.5
(22) Date of filing: 22.12.2007
(51) Int. Cl.: B60J 5/10

(54) **Vehicle back door arrangement**

(71) Applicant: GM Global Technology Operations, Inc., Detroit MI 48265-3 (US)
(72) Inventor: Grahn, Micael, 46154 Trollhättan (SE)
(74) Representative: Strauss, Peter

(57) **Abstract**

The present invention relates to a vehicle back door arrangement (1) comprising a linear power means (2), said power means (2) contributes in opening and closing of a vehicle back door (4) being fastened to a back door hinge region (5). The linear power means (2) has a main extension component in a direction transverse to a vertical longitudinal plane of the vehicle. The vehicle back door arrangement (1) further comprises a force transfer system (3) that transfers a force from the linear power means (2) to a force directed in an opening movement direction of a back door hinge (5).

The present invention aims at providing a space-efficient vehicle back door arrangement.

## Description

### Technical field

The present invention relates to a vehicle back door arrangement comprising a linear power means, said linear power means contributes in opening and closing of a vehicle back door being fastened to a back door hinge region.

### Technical background

A vehicle back door is normally mounted to the vehicle structure by means of hinges in such a way that the back door is pivotally from a closed state to an opened state. In order to assist in the opening and closing of the back door gas dampers, that apply a forces on the back door hinges, are often used. During opening of the back door the gas dampers apply forces in the opening direction and thereby the external force needed to open the door is reduced. The gas dampers then acts to keep the door opened as long as no external force is applied. During closing of the back door the gas dampers assist in such a way that a smooth closing of the back door can be performed.
Normally, such gas dampers are mounted in the D-pillars and connected to back door. This location is however not desirable due to lack of space. Another known solution is to locate the gas dampers longitudinally in the roof of the vehicle. The gas dampers are then working mainly in the length-direction of the vehicle. Lack of space and/or the geometry of the actual vehicle structure may however cause problem in trying to locate the gas dampers this way. Especially, in a vehicle having a transparent roof it might be difficult to arrange the gas dampers longitudinally in the roof of the vehicle since the gas dampers then may be visible.

It is desirable to achieve a space-efficient vehicle back door arrangement which is easy to mount in a vehicle.

### Summary of the invention

It is an object of the present invention to overcome the above described drawbacks, and to provide an improved vehicle back door arrangement.

This and other objects that will be apparent from the following summary and description are achieved by a back door arrangement according to the appended claims.

According to an aspect of the present invention, there is provided a vehicle back door arrangement comprising a linear power means, said power means contributes in opening and closing of a vehicle back door being fastened to a back door hinge region. The power means has a main extension component in a direction transverse to a vertical longitudinal plane of the vehicle. The vehicle back door arrangement further comprises a force transfer system that transfers a force from the power means to a force directed in an opening movement direction of a back door hinge.

By locating the linear power means with a main extension component in a direction transverse to a vertical longitudinal plane of the vehicle, a space efficient back door arrangement is achieved since it is normally easier to find available space for an elongated device oriented this way. Another advantage is that an arrangement that is easy to mount is achieved since the power means and force transfer system can be located close to the back door. Furthermore, the linear power means can be hidden between the inner and the outer roof without being visible in vehicles having a roof with a large transparent part. Due to the hidden location, the linear power means is protected from damage due to mechanical impacts. Another advantage is that a luggage compartment that is easy to load is provided since the linear power means will not obstruct in loading of the luggage compartment. Since the power means is not located in the D-pillar the size of the D-pillar may be reduced, which is desirable for instance in vehicles having D-pillars being partly transparent.

Although the working direction of the linear power means differ from the opening movement direction of the back door the power means is effectively utilized due to the force transfer system. Locating the linear power means having a main extension component in a direction transverse to the longitudinal direction of the vehicle is thus possible due to the force transfer system. Hence, the power means can be located with respect to available space in the actual vehicle design rather than with respect to the opening direction of the back door hinge.

By adapting the force transfer system it is possible to use a wide range of power means having various force level and stroke, which means that a standard component can be used. Hence, a back door arrangement that can be produced in a cost-effective manner is provided.

By the expression "linear power means" is meant a component which has an elongated shape acting in its longitudinal direction, such as a gas damper, a power strut, a linear electric actuator, a pneumatic- or a hydraulic cylinder.

Preferably, the force transfer system is formed by a linkage system having lever arms. Thus, a robust force transfer system is achieved. Furthermore, the linkage system makes it possible to adapt and/or optimize lever arm lengths with respect to the force and stroke of the actual power means. Hence, the required force and/or stroke of the power means may be reduced. This means that the linkage system can be adapted in such a way that a standard component can be used. By using lever arms a robust transfer of the force from the power means to a back door hinge is achieved.

More preferably such a linkage system comprises a linkage system member having a base portion, from which a force receiving moment arm and a force transfer moment arm extend, said force receiving moment arm being connected to the power means and said force transfer moment arm being connected to the back door hinge region.

Thus, a leverage is achieved which means that a standard component, can be used as power means by tuning the lever arm lengths and the lever arm orientations.

The linkage system member is preferably pivotally connected to a structural part of the vehicle. Hence, a robust back door arrangement is achieved.

Preferably, the force transfer system further comprises a rod, which is arranged between the force transfer moment arm and the back door hinge region. Thus, it is possible to locate the linkage system member at a distance from the back door hinge region.

Preferably, one end of said rod is connected to the force transfer moment arm by means of a ball joint and the other end of said rod is connected to the hinge by means of a ball joint in order to allow movement of the rod in three dimensions.

In an alternative embodiment, the linear power means is formed by a linear electric actuator having two working rods connected to a first and a second back door hinge respectively. Thus, a robust and space-efficient back door arrangement having few parts and few attachment points is provided.

### Brief Description of the drawings

The present invention will now be described in more detail with the reference to the accompanying schematic drawings, which show preferred embodiments in which:
Fig 1 shows a perspective view of a vehicle fitted with a back door arrangement comprising a power means and a force transfer system according to a first embodiment.
Fig 2a shows a perspective view of a part of the vehicle back door arrangement shown in fig 1, the back door being in a closed state.
Fig 2b shows a section view of a part of the vehicle back door arrangement shown in fig 1, the back door being in a closed state.
Fig 2c shows a perspective view of a part of the vehicle back door arrangement shown in fig 1, the back door being in a opened state.
Fig 2d shows a section view of a part of the vehicle back door arrangement shown in fig 1, the back door being in a opened state.
Fig 3 shows a perspective view of a vehicle fitted with a back door arrangement comprising a power means and a force transfer system according to a second embodiment.

### Technical description

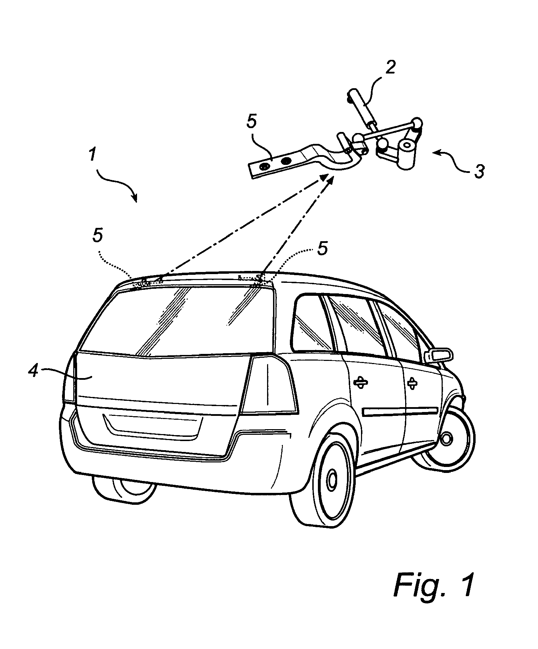

Fig 1 shows a vehicle fitted with a vehicle back door arrangement 1 comprising a linear power means 2 and a force transfer system 3 according to a first embodiment of the present invention. The linear power means 2 contributes in opening and closing of a back door 4 that is fastened to back door hinges 5. The arrows in fig 1 indicate that in this embodiment a first and a second linear power means 2 are connected to different back door hinges 5 by means of a first and a second force transfer system 3 respectively. Alternatively, the vehicle back door arrangement may comprise one linear power means 2 connected to a back door hinge region 5.

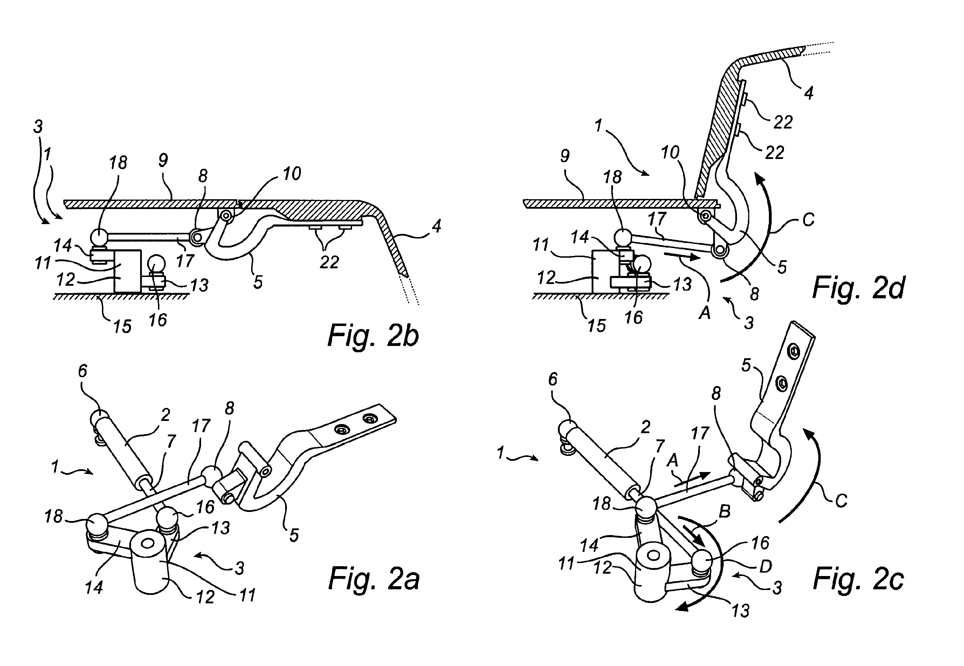

Fig 2a and 2b show a perspective view and a cross section view of a part of the back door arrangement 1 in a closed state, i.e. the back door 4 being closed. An linear power means 2, in this case a gas damper, is located with a main extension component transverse to the length-direction of the vehicle (not shown). The gas damper 2 is connected to the vehicle by means of a mechanical joint 6, in this case a ball joint. The gas damper 2 has a working rod 7 working in the longitudinal direction of the gas damper 2. A force transfer system 3 is connected to a back door hinge region, in this case a back door hinge 5, by means of a ball joint 8. The back door 4 is fastened to the back door hinge 5 by means of fastening means 22. A movement of the back door hinge 5 thus causes a movement of the back door 4. The back door hinge 5 is pivotally connected to a structural part 9 of the vehicle by means of a mechanical joint 10.

In this embodiment the force transfer system 3 is a linkage system to which the gas damper working rod 7 is connected. The linkage system 3 transfers a force from the gas damper 2 to a force acting on the back door hinge 5 in the opening movement direction of the back door hinge 5, as indicated by arrow A in fig 2c and fig 2d. The linkage system 3 is formed by a force transfer member 11 having a cylindrical base part 12, a force receiving moment arm 13 extending from the cylindrical base part 12 and a force transfer moment arm 14 also extending from the cylindrical base part 12. The cylindrical base part 12 is pivotally supported in a structural part 15, see fig 2b, of the vehicle and thus a robust force transfer system 3 that allows rotation of the base part 11, and thereby the moment arms 13,14, around the longitudinal axis of the cylindrical base part 12 is provided. The linkage system 3 is adapted to the actual force levels and supported in such a way that a robust force transfer from the gas damper 2 to the back door hinge 5 is provided. The force receiving moment arm 13 is connected to the gas damper working rod 7 by means of a mechanical joint, in this case a ball joint 16. The force transfer moment arm 14 is connected to the back door hinge 5 by means of a rod 17. The rod 17 is connected to the force transfer moment arm 14 by means of a ball joint 18 and to the back door hinge 5 by means of ball joint 8. The ball joints 8,17 allow the rod 17 to move in three dimensions while transfer a force from the force transfer moment arm 14 to the back door hinge 5. This is needed since the transfer arm 14 and the back door hinge 5 is moving in planes not being parallel to each other. The force transfer arm 14 is moving in a substantially horizontal plane and the hinge 5 is moving in a substantially longitudinally vertical plane.

Fig 2c and 2d show a perspective view and a cross section view of a part of the back door arrangement 1 in an opened state, i.e. the back door 4 being in opened. Due to a force from the linear power means 2, or due to an external force in combination with a force from the linear power means 2, the back door hinge 5 has been moved in an opening movement direction, which direction is indicated by arrow A, of the back door hinge 5. The linear power means 2 working direction is indicated by arrow B. The back door hinge movement results in opening of the back door 4, indicated by arrow C. Arrow D indicates the rotational direction in which the force transfer member 11, and thereby the force receiving moment 13 arm and the force transfer moment arm 14, rotates during opening of the back door 4.

As mentioned above the gas damper 2 is pivotally mounted to the vehicle (not shown) by means of a ball joint 6 and the gas damper working rod 7 is connected to the force receiving arm 13 by means of a ball joint 16. It is however also possible to mount the gas damper to the vehicle and the force transfer system by means of a mechanical joints.

The linear power means and the force transfer system are preferably mounted between the inner roof, such as a headliner or a trim part, and the outer roof, which means that they are hidden.

By varying and/or tuning the moment arm lengths and/or the angle between them, the force transfer system can be adapted to a suitable existing standard power means, such as a gas damper, having a specific stroke and force. Furthermore, it is possible to tune the lever arms together with the power means to reduce the required force and/or stroke of the power means.

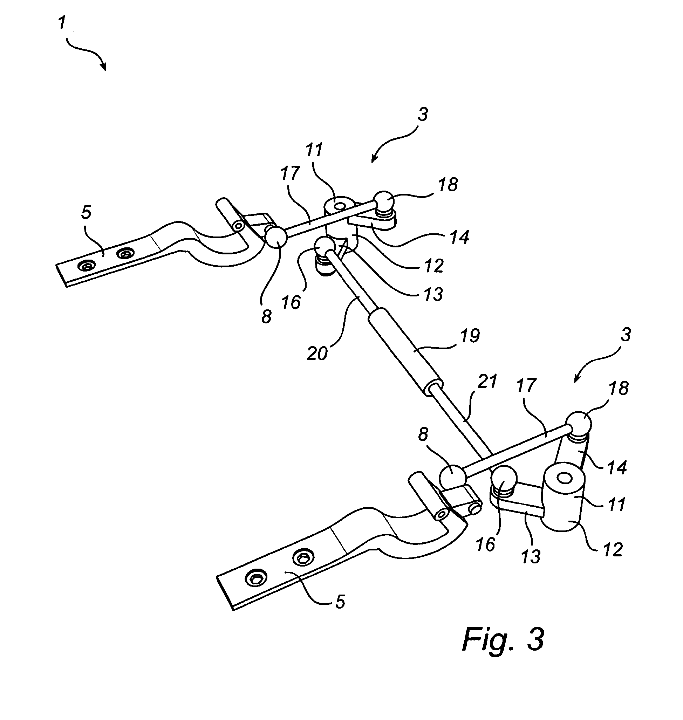

Fig 3 shows a second embodiment of the present invention. Essentially all features disclosed in the first embodiment are also present in the second embodiment with reference numerals identifying similar or same features. Having mentioned this the description will focus on explaining the differing features. In the second embodiment a linear power means 2, in this case a linear electric actuator 19, having two working rods 20 and 21, is used. Each of the working rods 20, 21 are connected to a back door hinge 5 via a linkage system 3, as described in the first embodiment. Since the two working rods 20,21 are connected to linkage systems 3 that are attached to the vehicle, the power means 19 do not need to be attached to the vehicle structure. Since the two linkage systems are mounted to the vehicle structure in a robust way there is thus no need for a bracket attaching the power means to the vehicle structure. Hence, a robust and space-efficient back door arrangement having few parts and attachment points is provided.

In the following the function of a back door arrangement according to an embodiment of the present invention is described. In opening of the back door 4 the linear power means 2 applies a force on the force receiving arm 13 causing a rotation of the force receiving arm 13 as well as the force transfer arm 14 around the longitudinal axis of the force transfer member 11. This rotation results in a movement of the rod 17 and thereby in a rotation of the back door hinge 5. Due to the force contribution from the linear power means 2 the external force needed to move the back door 4 to an open state is reduced. In the opened state the gas damper 2 acts to keep the back door 4 in an opened state. During closing of the back door 4, by means of applying an external force, the gas damper 2 contributes in such a way that a smooth closing can be performed.

It will be appreciated that the described embodiment of the invention can be modified and varied by a person skilled in the art without departing from the inventive concept defined in the claims. It is realized by a person skilled in the art that features from various embodiments disclosed herein may be combined with one another in order to provide further alternative embodiments.

For instance it is realized that in the first embodiment power means 2 and force transfer system 3 can be connected to one or more of the back door hinges 5. It is however preferred to connect power means to at least two back door hinges, as indicated by the arrows in fig 1, to provide a robust solution. In this case, a second power means and a second force transfer system is connected to a second back door hinge.

In the shown embodiments the back door arrangement 1 is fitted in a station wagon type of vehicle. It is however possible to use a back door arrangement according to the present invention in other types of vehicles, such as sedans and hatch backs.

### Figure references (11006921)

- 1.: vehicle back door arrangement
- 2.: linear power means
- 3.: force transfer system
- 4.: vehicle back door
- 5.: vehicle back door hinge
- 6.: ball joint
- 7.: gas damper working rod
- 8.: ball joint
- 9.: vehicle structural part
- 10.: mechanical joint
- 11.: linkage system member
- 12.: cylindrical base part (of linkage system member 11)
- 13.: force receiving moment arm
- 14.: force transferring moment arm
- 15.: vehicle structural part
- 16.: ball joint
- 17.: rod
- 18.: ball joint
- 19.: linear electric actuator
- 20.: first working rod of linear electric actuator 19
- 21.: second working rod of linear electric actuator 19
- 22.: fastening means

## Claims

1. A vehicle back door arrangement (1) comprising a linear power means (2), said linear power means (2) contributes in opening and closing of a vehicle back door (4) being fastened to a back door hinge region (5), **characterised in that** said power means (2) has a main extension component in a direction transverse to a vertical longitudinal plane of the vehicle, and that said vehicle back door arrangement (1) further comprises a force transfer system (3) that transfers a force from said linear power means (2) to a force directed in an opening movement direction of a back door hinge (5).

2. The vehicle back door arrangement (1) according to claim 1, wherein said force transfer system is formed by a linkage system (3).

3. The vehicle back door arrangement (1) according to claim 2, wherein said linkage system (3) comprises a linkage system member (11) having a base portion (12), from which a force receiving moment arm (13) and a force transfer moment arm (14) extend, said force receiving moment arm (13) being connected to said linear power means (2) and said force transfer moment arm (14) being connected to the back door hinge region (5).

4. The vehicle back door arrangement (1) according to any of claims 2-3, wherein said linkage system member (11) is pivotally supported to a structural part (15) of the vehicle.

5. The vehicle back door arrangement (1) according to any of claims 2-4, wherein said linkage system (3) further comprises a rod (17), which is arranged between the force transfer moment arm (14) and the back door hinge region (5).

6. The vehicle back door arrangement (1) according to claim 5, wherein one end of said rod (17) is connected to the force transfer arm (14) by means of a ball joint (18) and the other end of said rod (17) is connected a back door hinge (5) by means of a ball joint (8).

7. The vehicle back door arrangement (1) according to any of claims 1-6, wherein said linear power means (2) is formed by a linear electric actuator (19) having two working rods (20, 21).
